# EUROPEAN PATENT APPLICATION

(11) **EP 1 380 631 A1**
(43) Date of publication of application: **14.01.2004**
(21) Application number: 02718723.6
(22) Date of filing: 13.03.2002
(51) Int. Cl.: C10G 35/095, B01J 29/06

(54) **METHOD FOR PROCESSING OIL DISTILLATE**

(30) Priority: 19.04.2001 RU 2001110589
(71) Applicant: INSTITUT KATALIZA IMENI G.K. BORESKOVA SIBIRSKOGO OTDELENIA ROSSIISKOI AKADEMII NAUK, Novosibirsk, 630090 (RU)
(72) Inventor: ECHEVSKY, Genady Viktorovich, Novosibirsk, 630117 (RU); KLIMOV, Oleg Vladimirovich, Novosibirsk, 630055 (RU); KIHTYANIN, Oleg Vladimirovich, Novosibirsk, 630058 (RU); KODENEV, Evgeny Gennadyevich, Novosibirsk, 630055 (RU); KILDYASHEV, Sergei Petrovich, Novosibirsk, 630090 (RU)
(74) Representative: Goddar, Heinz J., Dr.
(86) International application number: PCT/RU2002/000088
(87) International publication number: WO 2002/086023

(57) **Abstract**

The preset invention relates to petrochemistry, particularly to catalytic processes for producing high-octane gasoline fractions from straight-run petroleum distillates.

The invention solves the problem of providing an improved process for producing high-octane gasolines, characterized by simplified technology and an increased yield of the target products - high-octane gasoline fractions.

The posed problem is solved by a method of processing petroleum distillates into petroleum fractions with final boiling point not higher than 195°C and motor octane number not lower than 80, which consists in converting hydrocarbon feedstock in the presence of a porous catalyst at a temperature of 250-500°C, a pressure not exceeding 2 MPa, with mass flow rates of hydrocarbon mixture not over 10 h⁻¹, wherein petroleum distillates with the final boiling point of 200-400°C are used as the feedstock and an aluminosilicate zeolite with the SiO₂/Al₂O₃ molar ratio not over 450, selected from the series of ZSM-5, ZSM-11, ZSM-35, ZSM-38, ZSM-48, BETA type, is used as the catalyst.

A second variant of solving the problem differs from the first one in that as the catalyst use is made of gallosilicate, galloaluminosilicate, ferrosilicate, ferroaluminosilicate, chromosilicate, chromoaluminosilicate of ZSM-5, ZSM-11, ZSM-35, ZSM-38, ZSM-48, BETA type.

A third variant of solving the problem consists in using aluminophosphate of AlPO-5, AlPO-11, AlPO-31, AlPO-41, AlPO-36, AlPO-37, AlPO-40 type as the catalyst, with an element selected from the series: magnesium, zinc, gallium, manganese, iron, silicon, cobalt, cadmium, introduced into the structure at the stage of synthesis.

## Description

The preset invention relates to petrochemistry, and more particularly to catalytic processes for producing high-octane gasoline fractions from straight-run petroleum distillates.

There exist a number of processes for producing high-octane gasoline fractions from a hydrocarbon feed in the presence of catalysts. Known in the art is a process for producing high-octane gasolines by reforming gasoline fractions of gas condensates [Shkuratova E.A. et al., Production of High-octane Gasolines by Reforming of Gasoline Fractions of Gas Condensates. In: Collection of papers "Production and Separation of Petrochemical Synthesis Products". Krasnodar Book Publishers, 1974, pp. 55-64 (in Russian)].

According to this process, fractions prelimiarily isolated from gas condensate are subjected to fine catalytic hydrofining, dehydration with an adsorbent, and then to reforming. The process is carried out on an AP-64 alumina-platinum catalyst at temperatures of 480-510°C, pressure of 3.5 MPa, space feed velocity of 1.5 h⁻¹ and with circulation of hydrogen containing gas. This process can give high-octane gasoline fractions with a motor octane number (M.O.N) of up to 79-89 and reforming stock yield of 78-89%. The main disadvantages of this process are: complicated stock preparation technology and use of hydrogen-containing gas.

A process of producing motor fuels from gas condensate fractions on zeolite catalysts is known [ Agabalyan et al., Catalytic Processing of Straight-run Gas Condensate Fractions into High-octane Fuels. In: Khimiya i Tekhnologiya Topliv i Masel, 1988, No. 5, pp. 6-7 (in Russian)).

As described in this publication, high-octane gasclines are produced by the "Zeoforming" process from straight-run gasoline fractions isolated from gas condensates along with gaseous straight-run diesel and residual fractions. The "Zeoforming" process is carried out in the following manner: a straight-run gasoline fraction is separated to isolate LB-58°C and >58°C fractions, the second fraction is contacted at elevated temperatures (of up to 460°C) and an excess pressure (of up to 5 MPa) with a zeolite-containing catalyst, the reaction products are fractionated to isolate hydrocarbon gases and a residual >195°C fraction and a high-octane <195°C fraction, the latter fraction being then compounded with the LB-58°C fraction to produce the target gasoline. The main disadvantages of this process are relatively low yields and octane numbers of the gasolines thus produced.

The prior art closest to the present invention in the technical essence and the obtainable effect is a process of producing high-octane gasoline from gas condensate fractions [RU 2002383 C1, C10G 51/04, 28.02.1994]. According to said counterpart, a stable gas condensate is fractionated to isolate the following straight-run fractions: a gasoline fraction boiling out at a temperature of up to 140-200°C, a diesel fraction boiling out within 140-300°C, and a residual fraction boiling at a temperature above 240°C. The residual fraction or its mixture with gaseous reaction products is pyrolyzed at a temperature of 600-900°C. The products of the pyrolysis are fractionated to isolate a gaseous fraction and a liquid fraction. The pyrolysis gas is mixed with the straight-run gasoline fraction and subjected to joint contacting with a zeolite-containing catalyst. The products of contacting are fractionated to isolate hydrocarbon gases and a gasoline fraction. The gasoline fraction is compounded with the pyrolysis condensate and subjected to rectification to isolate the target gasoline of the LB-195°C fraction and a residual >185°C fraction. With this process, the yield of the target gasoline fraction is 46.8% on conversion to stable gas condensate or 82.4% on conversion to the straight-run gasoline fraction.

Therefore, the main disadvantages of the process of producing high-octane gasolines, closest to the proposed invention are complexity of the technology of producing high-octane gasolines because of multiple fractionation of the mixture of hydrocarbons, and relatively low yields of the target gasoline fractions on conversion to processed feedstock.

The present invention solves the problem of providing an improved process for producing high-octane gasolines, characterized by simplified technology and an increased yield of the target products - high-octane gasoline fractions.

The posed problem is solved by a method of processing petroleum distillates into petroleum fractions with final boiling point not higher than 195°C and motor octane number not lower than 80, which consists in converting hydrocarbon feedstock in the presence of a porous catalyst at a temperature of 250-500°C, a pressure not exceeding 2 MPa, with mass flow rates of hydrocarbon mixture not over 10 h⁻¹, wherein petroleum distillates with the final boiling point of 200-400°C are used as the feedstock and an aluminosilicate zeolite with the SiO₂/Al₂O₃ molar ratio not over 450, selected from the series of ZSM-5, ZSM-11, ZSM-35, ZSM-38, ZSM-48, BETA type, is used as the catalyst.

A second variant of solving the problem differs from the first one in that as the catalyst use is made of gallosilicate, galloaluminosilicate, ferrosilicate, ferroaluminosilicate, chromosilicate, chromoaluminosilicate of ZSM-5, ZSM-11, ZSM-35, ZSM-38, ZSM-48, BETA type.

A third variant of solving the problem consists in using aluminophosphate of AlPO-5, AlPO-11, AlPO-31, AlPO-41, AlPO-36, AlPO-37, AlPO-40 type as the catalyst, with introducing an element selected from the series: magnesium, zinc, gallium, manganese, iron, silicon, cobalt, cadmium, into the structure at the stage of synthesis.

The catalyst used for each variant of the process may contain a compound of at least one of metals from the series: zinc, gallium, nickel, cobalt, molybdenum, tungsten, rhenium, rare-earth elements, platinum group metals in an amount not exceeding 10 wt.%. The catalyst for each variant of the process is prepared by introducing an additive by a method of impregnation and/or a method of ion exchange at a temperature not over 20°C or by applying an additive from a gas phase or by introducing an additive by mechanical blending with the starting material, followed by drying and calcination.

The starting petroleum distillates containing sulfur compounds in amounts not exceeding 10 wt.% on conversion to elemental sulfur are contacted with the catalyst without preliminarily desulfurizing said distillates.

The main distinctive feature of the proposed process is that petroleum straight-run distillates comprising a wide range of hydrocarbons are used as the feedstock for producing high-octane gasolines, without preliminary fractionation of these distillates with isolation of gaseous, straight-run gasoline, diesel and residual fraction and without preliminary purification of these distillates from sulfur-containing compounds.

The technical effect of the proposed process consists in that conversion of petroleum straight-run distillates comprising a wide range of hydrocarbons without their preliminary fractionation simplifies the process, reduces the number of process steps and increases the yield of high-octane gasoline fractions on conversion to the straight-run gasoline fraction comprised in the petroleum distillates.

The process is carried out as follows.

As the starting material for preparing a catalyst according to the process of the invention, use is made of one of materials selected from the series of: either zeolites ZSM-5, ZSM-11, ZSM-35, ZSM-38, ZSM-48, BETA with the SiO₂/Al₂O₃ molar ratio not over 450, gallosilicates and galloaluminosilicates, ferrosilicates, ferroaluminosilicates, chromosilicates, chromoaluminosilicates of ZSM-5 and/or ZSM-11, ZSM-48, BETA type, or aluminophosphates of AlPO-5, AlPO-11, AlPO-31, AlPO-41, AlPO-36, AlPO-37, AlPO-40 type with elements selected from the series: magnesium, zinc, gallium, manganese, iron, silicon, cobalt, cadmium introduced into the structure at the stage of synthesis.

Further the starting material is modified, if required, by introducing into its composition a compound of at least one of metals from the series: zinc, gallium, nickel, cobalt, molybdenum, tungsten, rhenium, rare-earth elements, platinum group metals in an amount not exceeding 10 wt.%.

The zeolite modification is carried out by the method of impregnation, activated impregnation in an autoclave, deposition from gaseous phase, ion exchange, mechanical blending of components. After introducing the modifying additive, the catalyst is dried and calcined at temperatures of up to 600°C.

The resulting catalyst is placed into a flow reactor, purged either with nitrogen or with an inert gas or with their mixture at temperatures of up to 600°C, and after that a hydrocarbon stock is fed at mass flow rates of up to 10 hr⁻¹, temperatures of 250-500°C and pressure not over 2 MPa.

Examples given below describe the present invention in detail and illustrate its embodiments.

### Example 1.

A 0.2-0.8 mm fraction is prepared from ZSM-5 type zeolite powder with the SiO₂/Al₂O₃ molar ratio equal to 60. 5 g of the prepared catalyst is placed into a flow reactor, purged with nitrogen (5 liter/hr) at 500°C for 2 hours. After that the temperature is lowered to 350°C and the nitrogen supply is stopped. Further, at this temperature and atmospheric pressure the starting LB-250°C distillate containing 0.5% of sulfur (gasoline fraction content, 71.1 wt.%; approximate M.O.N., 58.3) is fed at the mass flow rate of 1.5 hr⁻¹. 2 hours after the commencement of the reaction the yield of the gasoline fraction was 60.9 wt.% (approximate M.O.N 81.5), this amounting to 77% of the gasoline fraction in the composition of the starting distillate.

### Example 2.

To 30 g of BETA type zeolite powder with the SiO₂/Al₂O₃ molar ratio equal to 26 1 liter of an aqueous solution containing 15 g of Ga(NO₃)₃×8H₂O is added. The resulting suspension is boiled with stirring in a reflux condenser for 4 hours, and after that the powder is separated on a filter, washed repeatedly with distilled water, and dried. The obtained specimen is dried at 100°C, calcined at 550°C, and then a 0.2-0.8 mm fraction is prepared. The catalyst contains 0.7 wt.% of gallium.

5 g of the obtained catalyst are placed into a flow reactor, purged with nitrogen (5 liter/hr) at 500°C for 2 hours, then the temperature is lowered to 350°C and the nitrogen supply is stopped. Further, at this temperature and atmospheric pressure the starting LB-300°C distillate (gasoline fraction content, 69.7 wt.%; approximate M.O.N., 57.7) is fed at the mass flow rate of 2.4 hr⁻¹. 2 hours after the commencement of the reaction the yield of the gasoline fraction was 64.3 wt.% (approximate M.O.N 82.7), this amounting to 92.3% of the gasoline fraction in the composition of the starting distillate.

### Example 3.

A mechanical blend of 30 g of ZSM-11 type ferrosilicate zeolite and 3 g of WO₃ is prepared. The resulting specimen is calcined at 550°C for 4 hours, and then a 0.2-0.8 mm fraction is prepared.

5 g of the obtained catalyst are placed into a flow reactor, purged with nitrogen (5 liter/hr) at 500°C for 2 hours, then the temperature is lowered to 350°C and the nitrogen supply is stopped. Further, at this temperature and atmospheric pressure the starting LB-250°C distillate containing 0.5% of sulfur (gasoline fraction content, 79.1 wt.%; approximate M.O.N., 59.3) is fed at the mass flow rate of 2.1 .hr⁻¹. 2 hours after the commencement of the reaction the yield of the gasoline fraction was 58.2 wt.% (approximate M.O.N 84.5), this amounting to 73.6% of the gasoline fraction in the composition of the starting distillate.

### Example 4.

20 g of ZSM-48 type aluminosilicate zeolite are purged with nitrogen containing molybdenum acetyl acetonate vapors at 250°C. When the amount of the molybdenum acetyl acetonate passed through the specimen corresponds to the content of molybdenum in the specimen of 5%, the supply of nitrogen is stopped, and the specimen is purged with air at 560°C for 2 hours. Then a 0.2-0.8 mm fraction is prepared.

5 g of the obtained catalyst are placed into a flow reactor, purged with nitrogen (5 liter/hr) at 500°C for 2 hours, then the temperature is lowered to 350°C and the nitrogen supply is stopped. Further, at this temperature and pressure of 0.8 MPa the starting LB-300°C distillate containing 1.0% of sulfur (gasoline fraction content, 65.3 wt.%; approximate M.O.N., 59.2) is fed at the mass flow rate of 1.4 hr⁻¹. 2 hours after the commencement of the reaction the yield of the gasoline fraction was 52.9 wt.% (approximate M.O.N 86.6), this amounting to 81% of the gasoline fraction in the composition of the starting distillate.

### Example 5.

5 g of the catalyst prepared as described in Example 4 are placed into a flow reactor, purged with nitrogen (5 liter/hr) at 500°C for 2 hours, then the temperature is lowered to 350°C and the nitrogen supply is stopped. Further, at this temperature and atmospheric pressure the starting LB-300°C distillate containing 1.0% of sulfur (gasoline fraction content, 65.3 wt.%; approximate M.O.N., 59.2) is fed at the mass flow rate of 2.8 hr⁻¹. 2 hours after the commencement of the reaction the yield of the gasoline fraction was 60.2 wt.% (approximate M.O.N 81.8), this amounting to 92.2% of the gasoline fraction in the composition of the starting distillate.

### Example 6.

30 g of AlPO-31 type aluminophosphate zeolite containing 1.4 wt.% of Si introduced into the structure in the course of hydrothermal synthesis, are impregnated with a solution of nickel nitrate so that the Ni content in the final catalyst should be 1.5 wt.%. The catalyst is calcined for 2 hours at 600°C, and then a 0.2-0.8 mm fraction is prepared.

10 g of the obtained catalyst are placed into a flow reactor, purged with nitrogen (5 liter/hr), then the temperature is lowered to 400°C and the nitrogen supply is stopped. Further, at this temperature and pressure of 0.5 MPa the starting LB-300°C distillate containing 1.0% of sulfur (gasoline fraction content, 65.3 wt.%; approximate M.O.N., 59.2) is fed at the mass flow rate of 1.4 hr⁻¹. 2 hours after the commencement of the reaction the yield of the gasoline fraction was 57.7 wt.% (approximate M.O.N 84.1), this amounting to 88.4% of the gasoline fraction in the composition of the starting distillate.

### Example 7.

A 0.2-0.8 mm fraction is prepared from ZSM-5 type zeolite powder. 7 g of the prepared catalyst are placed into a flow reactor, purged with nitrogen (5 liter/hr) at 500°C for 2 hours. After that the temperature is lowered to 350°C and the nitrogen supply is stopped. Further, at this temperature and atmospheric pressure the starting LB-350°C distillate containing 3.75% of sulfur (gasoline fraction content, 53.1 wt.%; approximate M.O.N., 61.0) is fed at the mass flow rate of 1.3 hr⁻¹. 2 hours after the commencement of the reaction the yield of the gasoline fraction was 52.4 wt.% (approximate M.O.N 88.3), this amounting to 98.7% of the gasoline fraction in the composition of the starting distillate.

### Example 8.

5 g of a catalyst prepared as described in Example 7 are placed into a flow reactor, purged with nitrogen (5 liter/hr) at 500°C for 2 hours. After that the temperature is lowered to 350°C and the nitrogen supply is stopped. Further, at this temperature and pressure of 1 MPa the starting LB-350°C distillate containing 3.75% of sulfur (gasoline fraction content, 53.1 wt.%; approximate M.O.N., 61.0) is fed at the mass flow rate of 2.4 hr⁻¹. 3 hours after the commencement of the reaction the yield of the gasoline fraction was 54.0 wt.% (approximate M.O.N 85.6), this amounting to 101.7% of the gasoline fraction in the composition of the starting distillate.

### Example 9.

10 g of a catalyst prepared as described in Example 7 are placed into a flow reactor, purged with nitrogen (5 liter/hr) at 500°C for 2 hours. After that the temperature is lowered to 375°C and the nitrogen supply is stopped. Further, at this temperature and pressure of 1 MPa the starting LB-350°C distillate containing 3.75% of sulfur (gasoline fraction content, 53.1 wt.%; approximate M.O.N., 61.0) is fed at the mass flow rate of 2.7 hr⁻¹. 2 hours after the commencement of the reaction the yield of the gasoline fraction was 62.0 wt.% (approximate M.O.N 84.6), this amounting to 116.8% of the gasoline fraction in the composition of the starting distillate.

### Example 10.

7 g of a catalyst prepared as described in Example 7 are placed into a flow reactor, purged with nitrogen (5 liter/hr) at 500°C for 2 hours. After that the temperature is lowered to 400°C and the nitrogen supply is stopped. Further, at this temperature and pressure of 0.5 MPa the starting LB-350°C distillate containing 3.75% of sulfur (gasoline fraction content, 53.1 wt.%; approximate M.O.N., 61.0) is fed at the mass flow rate of 2.8 hr⁻¹. 3 hours after the commencement of the reaction the yield of the gasoline fraction was 60.3 wt.% (approximate M.O.N 82.7), this amounting to 113.6% of the gasoline fraction in the composition of the starting distillate.

### Example 11.

30 g of a catalyst prepared as described in Example 1 are impregnated with a zinc acetate solution such that the Zn content in the composition of the final catalyst should be 2.5 wt.%. The catalyst thus prepared is calcined for 2 hours at 550°C.

6 g of the prepared catalyst are placed into a flow reactor, purged with nitrogen (5 liter/hr) at 500°C for 2 hours. After that the temperature is lowered to 400°C and the nitrogen supply is stopped. Further, at this temperature and pressure of 0.6 MPa the starting LB-300°C distillate containing 1.0% of sulfur (gasoline fraction content, 65.3 wt.%; approximate M.O.N., 59.2) is fed at the mass flow rate of 1.3 hr⁻¹. 2 hours after the commencement of the reaction the yield of the gasoline fraction was 66.1 wt.% (approximate M.O.N 84.7), this amounting to 101.2% of the gasoline fraction in the composition of the starting distillate.

### Example 12.

To 50 g of ZSM-5 type gallium silicate 1 liter of an aqueous solution containing 30 g of lanthanum chloride is added. The resulting suspension is boiled with stirring in a reflux condenser for 3 hours, and after that the powder is separated on a filter, washed with distilled water, and dried. The obtained specimen is dried at 100°C, calcined at 550°C, and then a 0.2-0.8 mm fraction is prepared. The catalyst contains 0.6 wt.% of lanthanum.

10 g of the obtained catalyst are placed into a flow reactor, purged with nitrogen (5 liter/hr) at 500°C for 2 hours, then the temperature is lowered to 400°C and the nitrogen supply is stopped. Further, at this temperature and pressure of 0.7 MPa the starting LB-350°C distillate (gasoline fraction content, 53.1 wt.%; approximate M.O.N., 61.0) is fed at the mass flow rate of 1.2 hr⁻¹. 2 hours after the commencement of the reaction the yield of the gasoline fraction was 59.0 wt.% (approximate M.O.N 87.7), this amounting to 115.7% of the gasoline fraction in the composition of the starting distillate.

### Example 13.

30 g of ZSM-48 type ferroaluminosilicate are blended mechanically with tungsten oxide so that the tungsten content in the composition of the final catalyst should be 4 wt.%. The catalyst is calcined for 2 hours at 500°C, and after that a 0.2-0.8 fraction is prepared.

10 g of the obtained catalyst are placed into a flow reactor, purged with nitrogen (5 liter/hr) at 500°C for 2 hours, then the temperature is lowered to 375°C and the nitrogen supply is stopped. Further, at this temperature and pressure of 0.4 MPa the starting LB-300°C distillate containing 1.0% of sulfur (gasoline fraction content, 65.3 wt.%; approximate M.O.N., 59.2) is fed at the mass flow rate of 1.1 hr⁻¹. 2 hours after the commencement of the reaction the yield of the gasoline fraction was 61.1 wt.% (approximate M.O.N 80.2), this amounting to 93.6% of the gasoline fraction in the composition of the starting distillate.

### Example 14.

40 g of ZSM-35 type chromoaluminosilicate are blended mechanically with gallium nitrate so that the gallium content in the composition of the final catalyst should be 3.0 wt.%. The catalyst is calcined for 2 hours at 500°C, and after that a 0.2-0.8 fraction is prepared.

10 g of the obtained catalyst are placed into a flow reactor, purged with nitrogen (5 liter/hr) at 500°C for 2 hours, then the temperature is lowered to 400°C and the nitrogen supply is stopped. Further, at this temperature and pressure of 0.4 MPa the starting LB-350°C distillate containing 3.75% of sulfur (gasoline fraction content, 53.1 wt.%; approximate M.O.N., 61.0) is fed at the mass flow rate of 1.6 hr⁻¹. 2 hours after the commencement of the reaction the yield of the gasoline fraction was 59.0 wt.% (approximate M.O.N 84.8), this amounting to 111.1% of the gasoline fraction in the composition of the starting distillate.

### Example 15.

35 g of AlPO-36 type magnesium aluminophosphate containing 1.2 wt.% of magnesium introduced into the structure in the course of hydrothermal synthesis are blended mechanically with cobalt acetate in proportion such that the content of Co in the final catalyst should be 2.5 wt.%. The catalyst is calcined for 2 hours at 550°C and after that a 0.2-0.8 mm fraction is prepared.

10 g of the obtained catalyst are placed into a flow reactor, purged with nitrogen (5 liter/hr) at 500°C for 2 hours, then the temperature is lowered to 425°C and the nitrogen supply is stopped. Further, at this temperature and pressure of 1.0 MPa the starting LB-300°C distillate containing 1.0% of sulfur (gasoline fraction content, 65.3 wt.%; approximate M.O.N., 59.2) is fed at the mass flow rate of 1.6 hr⁻¹. 2 hours after the commencement of the reaction the yield of the gasoline fraction was 62.4 wt.% (approximate M.O.N 82.9), this amounting to 95.6% of the gasoline fraction in the composition of the starting distillate.

### Example 16.

20 g of AlPO-37 type silicoaluminophosphate containing 3.4 wt.% of Si introduced into the structure in the course of hydrothermal synthesis are mechanically blended with tungsten oxide WO₃ in proportion such that the content of W in the final catalyst should be 1.2 wt.%. The catalyst is calcined for 2 hours at 500°C and after that a 0.2-0.8 mm fraction is prepared.

10 g of the obtained catalyst are placed into a flow reactor, purged with nitrogen (5 liter/hr) at 500°C for 2 hours, then the temperature is lowered to 400°C and the nitrogen supply is stopped. Further, at this temperature and pressure of 0.4 MPa the starting LB-350°C distillate containing 3.75% of sulfur (gasoline fraction content, 53.1 wt.%; approximate M.O.N., 61.0) is fed at the mass flow rate of 1.2 hr⁻¹. 2 hours after the commencement of the reaction the yield of the gasoline fraction was 57.1 wt.% (approximate M.O.N 85.0), this amounting to 107.5% of the gasoline fraction in the composition of the starting distillate.

### Example 17.

30 g of AlPO-5 type ferroaluminophosphate containing 1.6 wt.% of Fe introduced into the structure in the course of hydrothermal synthesis are subjected to ion exchange in a solution of nickel nitrate for 26 hours at room temperature. The obtained catalyst is washed in distilled water, dried in air and calcined for 2 hours at 550°C. The content of nickel in the final catalyst is 0.8 wt.%. A 0.2-0.8 mm fraction is prepared from the catalyst.

10 g of the obtained catalyst are placed into a flow reactor, purged with nitrogen (5 liter/hr) at 500°C for 2 hours, then the temperature is lowered to 40°C and the nitrogen supply is stopped. Further, at this temperature and pressure of 0.6 MPa the starting LB-300°C distillate containing 1.0% of sulfur (gasoline fraction content, 65.3 wt.%; approximate M.O.N., 59.2) is fed at the mass flow rate of 1.6 hr⁻¹. 2 hours after the commencement of the reaction the yield of the gasoline fraction was 65.1 wt.% (approximate M.O.N 84.7), this amounting to 99.7% of the gasoline fraction in the composition of the starting distillate.

### Example 18.

30 g of AlPO-40 type silicoaluminophosphate containing 3.4 wt.% of Si introduced into the structure in the course of hydrothermal synthesis are impregnated with a solution of lanthanum nitrate in proportion such that the content of La in the final catalyst should be 2.0 wt.%. The catalyst is calcined for 2 hours at 500°C and after that a 0.2-0.8 mm fraction is prepared.

10 g of the obtained catalyst are placed into a flow reactor, purged with nitrogen (5 liter/hr) at 600°C for 2 hours, then the temperature is lowered to 400°C and the nitrogen supply is stopped. Further, at this temperature and pressure of 1.0 MPa the starting LB-300°C distillate containing 1.0% of sulfur (gasoline fraction content, 65.3 wt.%; approximate M.O.N., 59.2) is fed at the mass flow rate of 1.6 hr⁻¹. 2 hours after the commencement of the reaction the yield of the gasoline fraction was 60.6 wt.% (approximate M.O.N 81.3), this amounting to 92.8% of the gasoline fraction in the composition of the starting distillate.

### Example 19.

35 g of AlPO-41 type silicoaluminophosphate containing 1.5 wt.% of Si introduced into the structure in the course of hydrothermal synthesis are purged with nitrogen containing molybdenum acetyl acetonate vapors at 250°C. When the amount of the molybdenum acetyl acetonate passed through the specimen corresponds to the content of molybdenum in the specimen of 5%, the supply of nitrogen is stopped, and the specimen is purged with air at 550°C for 2 hours. Then a 0.2-0.8 mm fraction is prepared.

5 g of the obtained catalyst are placed into a flow reactor, purged with nitrogen (5 liter/hr) at 500°C for 2 hours, then the temperature is lowered to 450°C and the nitrogen supply is stopped. Further, at this temperature and pressure of 0.4 MPa the starting LB-350°C distillate containing 3.75% of sulfur (gasoline fraction content, 53.1 wt.%; approximate M.O.N., 61.0) is fed at the mass flow rate of 1.3 hr⁻¹. 2 hours after the commencement of the reaction the yield of the gasoline fraction was 55.6 wt.% (approximate M.O.N 85.2), this amounting to 104.7% of the gasoline fraction in the composition of the starting distillate.

### Example 20.

10 g of AlPO-11 type cobalt silicoaluminophosphate in the form of a 0.2-0.8 mm fraction are placed into a reactor, purged with nitrogen (5 liter/hr) at 500°C for 2 hours, then the temperature is lowered to 450°C and the nitrogen supply is stopped. Further, at this temperature and pressure of 0.8 MPa the starting LB-350°C distillate containing 3.75% of sulfur (gasoline fraction content, 53.1 wt.%; approximate M.O.N., 61.0) is fed at the mass flow rate of 1.5 hr⁻¹. 2 hours after the commencement of the reaction the yield of the gasoline fraction was 54.9 wt.% (approximate M.O.N 87.0), this amounting to 103.4% of the gasoline fraction in the composition of the starting distillate.

### Example 21.

30 g of AlPO-31 type cadmium aluminophosphate are impregnated with a solution of zinc acetate in proportion such that the content of zinc in the final catalyst should be 2.5 wt.%. The catalyst is calcined for 2 hours at 500°C and after that a 0.2-0.8 mm fraction is prepared.

10 g of the obtained catalyst are placed into a flow reactor, purged with nitrogen (5 liter/hr) at 600°C for 2 hours, then the temperature is lowered to 450°C and the nitrogen supply is stopped. Further, at this temperature and pressure of 1.0 MPa the starting LB-300°C distillate containing 1.0% of sulfur (gasoline fraction content, 65.3 wt.%; approximate M.O.N., 59.2) is fed at the mass flow rate of 1.5 hr⁻¹. 2 hours after the commencement of the reaction the yield of the gasoline fraction was 66.7 wt.% (approximate M.O.N 85.0), this amounting to 102.1% of the gasoline fraction in the composition of the starting distillate.

The advantage of the proposed method over the known methods is that in the conversion of straight-run petroleum distillates without their preliminary fractionation and purification from sulfur-containing compounds an increase achieved in the yield of high-octane gasoline fractions is up to 117 percent on the basis of the low-octane gasoline fraction in the starting petroleum distillates. The use of different catalysts makes it possible to obtain gasoline fractions with different octane numbers.

The high-octane gasoline fractions thus produced have a M.O.N not lower than 80 and are finished products which do not require introducing high-octane additives, the content of sulfur in the resulting gasolines not exceeding the permissible value of 0.05 wt.%.

## Claims

1. A method of processing petroleum distillates into petroleum fractions with final boiling point not higher than 195°C and motor octane number not lower than 80, which consists in converting hydrocarbon feedstock in the presence of a porous catalyst at a temperature of 250-500°C, a pressure not exceeding 2 MPa, with mass flow rates of a hydrocarbon mixture not over 10 h⁻¹, **characterized in that** petroleum distillates with the final boiling point of 200-400°C are used as the feedstock and an aluminosilicate zeolite with the SiO₂/Al₂O₃ molar ratio not over 450, selected from the series of ZSM-5, ZSM-11, ZSM-35, ZSM-38, ZSM-48, BETA type, is used as the catalyst.

2. A method according to claim 1, **characterized in that** the catalyst contains a compound of at least one of metals from the series: zinc, gallium, nickel, cobalt, molybdenum, tungsten, rhenium, rare-earth elements, platinum group metals in an amount not exceeding 10 wt.%.

3. A method according to claims 1, 2, **characterized in that** the catalyst is prepared by introducing an additive by a method of impregnation and/or a method of ion exchange at a temperature not over 20°C or by applying an additive from a gas phase or by introducing an additive by mechanical blending with the starting material, followed by drying and calcining the catalysts thus prepared.

4. A method according to claims 1, 2, 3, **characterized in that** starting petroleum distillates containing sulfur compounds in amounts not exceeding 10 wt.% on conversion to elemental sulfur are contacted with the catalyst without preliminarily desulfurizing said distillates.

5. A method of processing petroleum distillates into petroleum fractions with final boiling point not higher than 195°C and motor octane number not lower than 80, which consists in converting hydrocarbon feedstock in the presence of a porous catalyst at a temperature of 250-500°C, a pressure not exceeding 2 MPa, with mass flow rates of a hydrocarbon mixture not over 10 h⁻¹, **characterized in that** petroleum distillates with the final boiling point not higher than 400°C are used as the feedstock and gallosilicates, galloaluminosilicates, ferrosilicates, ferroaluminosilicates, chromosilicates, chromoaluminosilicates of ZSM-5 and/or ZSM-11, ZSM-48, BETA type are used as the catalyst.

6. A method according to claim 5, **characterized in that** the catalyst contains a compound of at least one of metals from the series: zinc, gallium, nickel, cobalt, molybdenum, tungsten, rhenium, rare-earth elements, platinum group metals in an amount not exceeding 10 wt.%.

7. A method according to claims 5, 6, **characterized in that** the catalyst is prepared by introducing an additive by a method of impregnation and/or a method of ion exchange at a temperature not over 20°C or by applying an additive from a gas phase or by introducing an additive by mechanical blending with the starting material, followed by drying and calcining the catalysts thus prepared.

8. A method according to claims 5, 6, 7, **characterized in that** starting petroleum distillates containing sulfur compounds in amounts not exceeding 10 wt.% on conversion to elemental sulfur are contacted with the catalyst without preliminarily desulfurizing said distillates.

9. A method of processing petroleum distillates into petroleum fractions with final boiling point not higher than 195°C and motor octane number not lower than 80, which consists in converting hydrocarbon feedstock in the presence of a porous catalyst at a temperature of 250-500°C, a pressure not exceeding 2 MPa, with mass flow rates of a hydrocarbon mixture not over 10 h⁻¹, **characterized in that** petroleum distillates with the final boiling point not higher than 400°C are used as the feedstock and aluminophosphate of AlPO-5, AlPO-11, AlPO-31, AlPO-41, AlPO-36, AlPO-37, AlPO-40 type, with an element selected from the series: magnesium, zinc, gallium, manganese, iron, silicon, cobalt, cadmium, introduced into the structure at the stage of synthesis, is used as the catalyst.

10. A method according to claim 9, **characterized in that** the catalyst contains a compound of at least one of metals from the series: zinc, gallium, nickel, cobalt, molybdenum, tungsten, rhenium, rare-earth elements, platinum group metals in an amount not exceeding 10 wt.%.

11. A method according to claims 9, 10, **characterized in that** the catalyst is prepared by introducing an additive by a method of impregnation and/or a method of ion exchange at a temperature not over 20°C or by applying an additive from a gas phase or by introducing an additive by mechanical blending with the starting material, followed by drying and calcining the catalysts thus prepared.

12. A method according to claims 9, 10, 11, **characterized in that** the starting petroleum distillates containing sulfur compounds in amounts not exceeding 10 wt.% on conversion to elemental sulfur are contacted with the catalyst without preliminarily desulfurizing said distillates.
